# EUROPÄISCHE PATENTSCHRIFT

(11) **EP 1 147 375 B1**
(45) Veröffentlichungstag und Bekanntmachung des Hinweises auf die Patenterteilung: **27.04.2005**
(21) Anmeldenummer: 99957864.4
(22) Anmeldetag: 06.10.1999
(51) Int. Cl.: G01C 21/36

(54) **VERFAHREN ZUR LEITUNG EINES FÜHRERS EINES FAHRZEUGS VON MINDESTENS EINEM START- ZU MINDESTENS EINEM ZIELPUNKT**
METHOD FOR LEADING THE DRIVER OF A VEHICLE FROM AT LEAST ONE STARTING POINT TO AT LEAST ONE POINT OF DESTINATION
PROCEDE POUR GUIDER LE PILOTE D'UN VEHICULE ENTRE AU MOINS UN POINT DE DEPART ET AU MOINS UN POINT DE DESTINATION

(30) Priorität: 21.12.1998 DE 19859078
(43) Veröffentlichungstag der Anmeldung: 24.10.2001
(73) Patentinhaber: ROBERT BOSCH GMBH, 70442 Stuttgart (DE)
(72) Erfinder: RYCHLAK, Stefan, D-31241 Ilsede (DE)
(86) Internationale Anmeldenummer: PCT/DE1999/003220
(87) Internationale Veröffentlichungsnummer: WO 2000/037890

(56) Entgegenhaltungen:
- EP-A- 0 372 840
- EP-A- 0 838 797
- WO-A-93/09511

## Beschreibung

### Stand der Technik

Die Erfindung geht von einem Verfahren zur Leitung eines Fahrzeugs, insbesondere eines Kraftfahrzeugs, Flugzeugs oder Schiffs, von mindestens einem Start- zu mindestens einem Zielpunkt nach der Gattung des unabhängigen Patentanspruchs aus.

In Fahrzeugen, beispielsweise Kraftfahrzeugen, Flugzeugen oder Schiffen installierte Navigationssysteme leiten einen Führer des Fahrzeugs durch optische oder akustische Ausgabe von Fahrtanweisungen schnell, einfach und sicher von einem aktuellen Standort zu einem gewünschten Zielort, ohne daß der Führer des Fahrzeugs bzw. Fortbewegungsmittels vor Fahrtantritt eine Route planen oder während der Fahrt den weiteren Routenverlauf anhand einer Karte nachvollziehen muß. Hierzu liegen entsprechende, beispielsweise auf Karten, Landkarten oder Straßenkarten basierende, Navigationsdaten in einem Speicher des Navigationsgeräts, vorzugsweise auf CD-ROM gespeichert vor. Das Navigationsgerät nutzt beispielsweise Fahrtstreckensensoren und einen Kompaß und gegebenenfalls zusätzlich die über Satelliten übertragenen Signale des GPS-(Global Positioning System)- Systems, um einen momentanen Standort des Fahrzeugs festzustellen und entsprechende Navigationsanweisungen zu berechnen, die zu einem vorbestimmten Ziel führen.

Bei aktuellen Navigationsgeräten der Firma Blaupunkt-Werke GmbH ist es möglich, nach einer entsprechenden Vorgabe durch den Benutzer Streckenabschnitte, die über eine bestimmte Eigenschaft verfügen, schon bei der Routenberechnung auszuschließen. So ist in einem Bedienmenu der erwähnten, für Kraftfahrzeuge vorgesehenen, Geräte ein Menupunkt vorgesehen, der eine Berechnung von Fahrtrouten unter Aussparung von gebührenpflichtigen Streckenabschnitten ermöglicht. Bei den genannten Geräten ist es jedoch nur möglich, gebührenpflichtige Streckenabschnitte generell bei der Routenberechnung zuzulassen oder von dieser auszunehmen.

EP-A-0 372 840 offenbart ein Fahrzeugnavigationssystem, bei dem eine Fahrtroute von einem Start- zu einem Zielpunkt auf Grundlage gespeicherter Kartendaten berechnet wird. Der Routenberechnung liegen dabei ein oder mehrere geeignet gewichtete Optimierungskriterien, wie beispielsweise kürzeste Entfernung der Route oder schnellste Route, zugrunde. Ein wesentliches Merkmal der beschriebenen Routenberechnung besteht darin, dass das Optimierungskriterium oder die mehreren geeignet gewichteten Optimierungskriterien einheitlich auf die gesamte Routenberechnung angewendet werden.

WO-A-93/09511 offenbart ebenfalls eine Routenberechnung für ein Fahrzeugnavigationssystem auf Grundlage gespeicherter Karteninformationen und in Karteninformationen enthaltener, Streckenabschnitten zugeordneter Attribute unter Berücksichtigung von Nutzerpräferenzen, wie schnellste oder kürzeste Route, möglichst wenige Linksabbiegevorgänge während Stosszeiten usw.

EP-A-0 838 797 offenbart ein Navigationsgerät, bei dem eine erste, statische und eine zweite dynamische Route unter Berücksichtigung aktueller Verkehrsinformationen berechnet und dem Fahrzeugführer zur Auswahl angeboten werden.

### Vorteile der Erfindung

Das erfindungsgemäße Verfahren mit den Merkmalen des unabhängigen Patentanspruchs hat demgegenüber den Vorteil, daß einzelne, über eine vorgegebene Eigenschaft verfügende Streckenabschnitte jeweils individuell durch den Benutzer aus- oder abwählbar sind. Daraus ergibt sich der weitere Vorteil, daß der Benutzer, beispielsweise im Sinne einer Abwägung zwischen geringstmöglichen Fahrtkosten, die eine möglichst vollständige Umgehung von gebührenpflichtigen Streckenabschnitten nahelegen könnte, und einer minimierten Fahrtdauer, die wiederum die Benutzung gebührenpflichtiger Streckenabschnitte sinnvoll erscheinen läßt, eine optimale Fahrtroute bestimmen kann.

Von besonderem Vorteil ist es dabei, wenn die über die vorgegebene Eigenschaft verfügenden Streckenabschnitte, also beispielsweise gebührenpflichtige Streckenabschnitte, die im Rahmen der Routenberechnung ermittelt wurden, zusammen mit einer jeweils verfügbaren Umgehungsstrecke ausgegeben werden. Dies ermöglicht dem Benutzer einen unmittelbaren Vergleich des über die vorgegebene Eigenschaft verfügenden Streckenabschnitts mit dem alternativ angebotenen Streckenabschnitt und erleichtert somit die Entscheidung für einen der beiden angebotenen Streckenabschnitte.

Weiterhin ist es dabei von Vorteil, wenn zusätzlich zu dem über die vorgegebene Eigenschaft verfügenden und dem alternativen Streckenabschnitt zusätzliche Informationen, durch die der Streckenabschnitt mit der vorgegebenen Eigenschaft oder der alternative Streckenabschnitt charakterisiert ist, ausgegeben werden. Dies erleichtert dem Benutzer, beispielsweise anhand eines Fahrtzeitvergleichs zwischen dem gebührenpflichtigen Streckenabschnitt und der Umgehungsstrecke, die Entscheidung über die Aus- oder Abwahl eines Streckenabschnitts mit der vorgegebenen Eigenschaft.

Ebenso ist es von Vorteil, wenn als einen Streckenabschnitt charakterisierende Eigenschaft eine Verkehrsstauung oder andere Verkehrsbehinderungen wie Baustellen oder Straßensperrungen vorgebbar sind, so daß der Benutzer auf Wunsch auch solchermaßen gekennzeichnete Streckenabschnitte umfahren kann.

### Zeichnungen

Ausführungsbeispiele der Erfindungen sind in der Figur dargestellt und werden in der nachfolgenden Beschreibung näher erläutert.

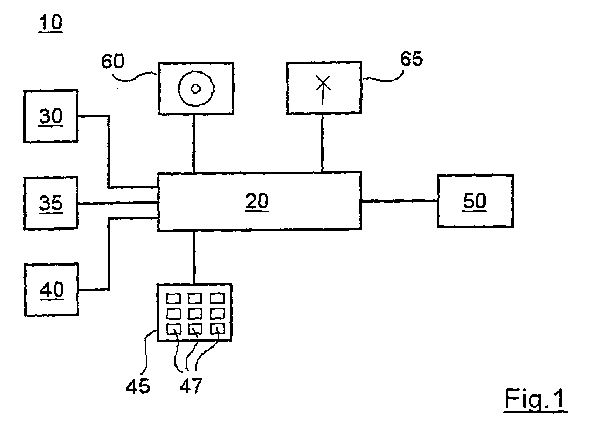

Figur 1 zeigt ein Blockschaltbild eines erfindungsgemäßen Navigationsgeräts zur Durchführung des erfindungsgemäßen Verfahrens.

### Beschreibung der Ausführungsbeispiele

Figur 1 zeigt ein Blockschaltbild eines erfindungsgemäßen Navigationsgeräts zur Durchführung des erfindungsgemäßen Verfahrens.

An die Gerätesteuerung 20 des erfindungsgemäßen Navigationsgeräts 10, die unter anderem auch den eigentlichen Navigationsrechner umfaßt, sind zum einen Mittel 30, 35, 40 angeschlossen, die Informationen über den Standort, die Bewegungsrichtung und den Bewegungszustand des Fahrzeugs abgeben.

Beim vorliegenden Ausführungsbeispiel handelt es sich dabei um einen Drehratensensor 30, mit dessen Hilfe durch Integration über die erfaßten Drehratenänderungen die Orientierung des Fahrzeugs, in dem das Navigationsgerät installiert ist, bezüglich der Himmelsrichtungen erfaßt wird. Weiter handelt es sich dabei um einen Wegstreckenmesser 35, der beispielsweise von Radsensoren eines Antiblockiersystems für Fahrzeugbremsen abgegebene Impulse erfaßt und aus der festgestellten Impulszahl und einem bekannten Radumfang eine zurückgelegte Fahrtstrecke ermittelt. Schließlich handelt es sich dabei um einen GPS-(Global Positioning System-) Empfänger 40 zum Empfang und zur Auswertung von von GPS-Satelliten ausgestrahlten Funksignalen, anhand derer die Position des Fahrzeugs feststellbar ist.

Weiterhin ist an die Steuerung 20 ein Speicher 60 angeschlossen, in dem Informationen einer Land- bzw. Straßenkarte in digitaler Form gespeichert sind. Beim vorliegenden Ausführungsbeispiel ist der Speicher 60 in Form eines CD-ROM-Laufwerks mit eingelegter CD-ROM als Datenträger für die Landkarteninformationen realisiert.

Ebenso kann es jedoch auch vorgesehen sein, daß der Speicher 60 in Form eines RAM- bzw. ROM-Halbleiterspeichers realisiert ist.

Weiterhin ist an die Steuerung 20 eine Ausgabeeinheit 50 angeschlossen, bei der es sich im vorliegenden Fall um eine Anzeigevorrichtung handelt. Auf dieser werden während des eigentlichen Navigationsvorganges Fahrtanweisungen für den Fahrzeugführer, beispielsweise in Form eines Richtungspfeiles bei bevorstehenden Abbiegevorgängen und einer Restentfernungsanzeige bis zum Abbiegevorgang, dargestellt. Ebenso ist es jedoch auch möglich, daß ergänzend oder alternativ zur optischen Anzeige die Ausgabevorrichtung 50 eine akustische Ausgabevorrichtung umfaßt, über die akustische Fahrtanweisungen, wie z. B. ,nach 100 Metern rechts abbiegen' o. ä., ausgegeben werden.

Schließlich ist an die Steuerung 20 eine Eingabeeinheit 45 mit Bedienelementen, wie Drucktasten 47 oder anderen Eingabemitteln, wie z. B. Drehknöpfen, zur Eingabe eines Navigations-Zielpunktes sowie zur Bedienung weiterer Funktionen des Geräts angeschlossen.

Das erfindungsgemäße Navigationsgerät sowie das erfindungsgemäße Navigationsverfahren funktionieren wie folgt.

Nach Einschalten des Navigationsgeräts 10 liefern die Sensoren 30, 35, 40, nämlich der Drehratensensor 30, der Wegstreckenmesser 35 und der GPS-Empfänger 40 Informationen, aus denen die Steuerung 20 bzw. der in der Steuerung enthaltene Navigationsrechner die aktuelle Position des Fahrzeugs, in das das erfindungsgemäße Navigationsgerät eingebaut ist, ermittelt. Gegebenenfalls berücksichtigt die Steuerung dabei im Sinne einer Plausibilitätsprüfung auch Daten aus der im Speicher 60 abgelegten Straßenkarte zur Korrektur der aufgrund der Sensordaten berechneten Fahrzeugposition. Diese Art der Korrektur der ermittelten Fahrzeugposition ist auch unter dem Begriff "Map Matching" bekannt.

Anschließend oder auch während der Bestimmung des aktuellen Fahrzeugstandorts erfolgt die Eingabe eines Navigations-Zielorts oder -punkts beispielsweise in folgender Weise.

Zunächst wird für Fahrten, beispielsweise im Inland, der Orts- oder Städtename des Zielpunktes an der Eingabeeinheit 45 eingegeben, wozu durch Blättern im Alphabet, beispielsweise mittels einer Wipptaste 47 bzw. Tastenwippe oder eines Drehknopfes, der erste Buchstabe des Städtenamens ausgewählt und anschließend bestätigt wird. Daraufhin erscheint an der Anzeigeeinheit 50 des Navigationsgeräts eine Auswahlliste von Orts- bzw. Städtenamen, die mit dem eingegebenen Buchstaben beginnen. Zur weiteren Auswahl des Städtenamens ist es nun möglich, mittels Wipptasten in der vorliegenden Städtenamen-Liste zu blättern, bis der gewünschte Städtename aufgefunden worden ist, alternativ dazu ist es jedoch auch möglich, durch Eingabe des zweiten und gegebenenfalls weiterer Buchstaben in der oben beschriebenen Art und Weise den Städtenamen einzugeben.

In einem zweiten Schritt wird nun in analoger Weise der Straßenname des gewünschten Zielpunktes eingegeben. Handelt es sich bei der als Navigationsziel gewählten Stadt um eine kleinere Stadt oder Gemeinde, kann es auch vorgesehen sein, sofort nach Eingabe des Städte- oder Ortsnamens eine Liste der Straßennamen über die Ausgabevorrichtung auszugeben, aus der der Benutzer den passenden Straßennamen auswählen kann.

Bei sehr langen Straßen mit gleichbleibenden Straßennamen kann ein dritter Schritt vorgesehen sein, in dem zusätzlich eine Hausnummer, eine Kreuzung mit einer anderen Straße oder ein anderer markanter Punkt entlang der Straße zur näheren Definition des Navigationsziels durch den Benutzer eingegeben wird.

Alternativ zu der beschriebenen Form der Zieleingabe kann es auch vorgesehen sein, daß das Navigationsziel durch eine der Zieladresse zugeordnete Nummer, beispielsweise eine Telefonnummer, eingegeben wird. Dazu verfügt das Navigationsgerät über einen Speicher, in dem eine Telefonnummernliste mit einer zugeordnete Adressenliste abgelegt ist, so daß eine eindeutige Zuordnung einer Telefonnummer zu einer Zieladresse möglich ist.

Weiterhin kann es auch vorgesehen sein, daß das Navigationsgerät 10 über einen Chipkartenleser verfügt, und daß das Navigationsziel von einer in den Chipkartenleser eingelegten Chipkarte gelesen wird. Dazu wird zuvor das Navigationsziel mittels eines dafür geeigneten Geräts, beispielsweise einem über einen Chipkartenleser verfügenden Personal Computer, in einen wiederbeschreibbaren Speicher der Chipkarte geschrieben.

Eine weitere Möglichkeit der Zieleingabe besteht darin, auf einer an einer Anzeigeeinheit dargestellten Land- oder Straßenkarte den Zielpunkt mittels beispielsweise CursorTasten zu markieren und auszuwählen, wobei aufgrund der im Speicher 60 des Navigationsgeräts 10 abgelegten Informationen dem markierten Zielort Zielkoordinaten zugeordnet werden.

Bei den bisher beschriebenen Verfahren der Zieleingabe wurde davon ausgegangen, daß nur ein einziger Zielpunkt eingegeben wird. Gemäß einem weiteren Ausführungsbeispiel der Erfindung kann es jedoch auch vorgesehen sein, mehrere Zielpunkte einzugeben, so daß der Navigationsrechner eine unter der Vorgabe beispielsweise einer minimalen Fahrtdauer oder - strecke optimale Fahrtroute berechnet. Dies ist beispielsweise für Zustellfahrzeuge beispielsweise eines Paketzustelldienstes sinnvoll, die innerhalb einer einzigen Zustellfahrt mehrere Zustelladressen ansteuern müssen.

Nach erfolgter Start- und Zielpunktbestimmung - sofern das Navigationsgerät über kein Selbstortungssystem verfügt, muß auch der Startort in der beschriebenen Weise eingegeben werden - ist es erfindungsgemäß vorgesehen, daß der Benutzer, im vorliegenden Fall eines Navigationsgeräts für ein Kraftfahrzeug der Kraftfahrzeugführer, eine vorgebbare Eigenschaft für einen potentiell zu meidenden Streckenabschnitt, beispielsweise einen Streckenabschnitt mit Straßenbenutzungsgebühr, eingeben kann. Die Eingabe einer bestimmten Eigenschaft eines Streckenabschnitts kann dabei z. B. durch Blättern innerhalb einer Liste von Eigenschaften mittels einer Wipptaste 47 erfolgen.

Dem liegt die Überlegung zugrunde, daß der Kraftfahrzeugführer bestimmte, über eine spezifische Eigenschaft verfügende Streckenabschnitte, wie beispielsweise gebührenpflichtige Autobahnabschnitte, von der Routenplanung ausnehmen möchte.

Besitzt der Benutzer jedoch beispielsweise detaillierte Kenntnisse über das Verkehrsaufkommen auf bestimmten Streckenabschnitten, beispielsweise aufgrund neuester über Rundfunk ausgestrahlter Verkehrsinformationen, kann es sinnvoll sein, dem Fahrzeugführer ein Eingreifen in die Routenplanung dahingehend zu ermöglichen, daß über die vorgegebene Eigenschaft verfügende Streckenabschnitte nicht automatisch aus der Routenplanung ausgeklammert werden, sondern der Benutzer darüber entscheiden kann, ob ein Streckenabschnitt berücksichtigt werden soll oder nicht.

Dazu ist es erfindungsgemäß vorgesehen, daß im Zuge der Fahrtroutenplanung dem Fahrzeugführer solche Streckenabschnitte, beispielsweise in Form einer Anzeige auf einer Anzeigeeinheit 50, zur Kenntnis gebracht werden, die über eine zuvor ausgewählte Eigenschaft, beispielsweise einen gebührenpflichtigen Streckenabschnitt, verfügen. Der Fahrzeugführer kann nun den ausgegebenen Streckenabschnitt akzeptieren, so daß dieser in die Routenplanung einbezogen wird, oder diesen als unerwünscht verwerfen, worauf ein alternativer Streckenabschnitt bei der Routenplanung bestimmt wird.

Da jedoch die Umfahrung beispielsweise gebührenpflichtiger Streckenabschnitte erhebliche Umwege oder Fahrtzeitverlängerungen mit sich bringen kann, soll gemäß einem erweiterten Ausführungsbeispiel der Fahrzeugführer in die Lage versetzt werden, bei Auftreten eines über die vorgegebene Eigenschaft verfügenden Streckenabschnitts innerhalb der Routenplanung jeweils den beispielsweise gebührenpflichtigen Streckenabschnitt aus der Routenplanung ausklammern, oder, falls dies inakzeptable Fahrtzeitverlängerungen oder sonstige Nachteile mit sich bringt, in die Routenplanung einbeziehen zu können.

Dazu ist es vorgesehen, daß neben dem über die vorgegebene Eigenschaft verfügenden Streckenabschnitt auch ein alternativer Streckenabschnitt bestimmt wird, und sowohl der über die vorgegebene Eigenschaft verfügende, als auch der alternative Streckenabschnitt, beispielsweise über eine Anzeigeeinheit, ausgegeben werden. Weiterhin ist es vorgesehen, daß zu mindestens dem alternativen oder dem über die vorgegebene Eigenschaft verfügenden Streckenabschnitt zusätzliche Informationen, durch die der alternative Streckenabschnitt charakterisiert ist, ausgegeben werden. Bei den den alternativen Streckenabschnitt charakterisierenden Merkmalen kann es sich beispielsweise um eine zusätzlich benötigte Fahrtzeit, eine zusätzliche Fahrtstrecke oder eine eingesparte Straßenbenutzungsgebühr handeln.

Bei einem weiteren Ausführungsbeispiel der Erfindung ist es vorgesehen, daß zusätzlich zu den den alternativen Streckenabschnitt charakterisierenden Eigenschaften auch die der über die vorgegebene Eigenschaft verfügenden Streckenabschnitt charakterisierenden Merkmale, wie beispielsweise eine Straßenbenutzungsgebühr, Straßensperrungen, Baustellen oder Verkehrsstauungen, ausgegeben werden.

Zur Erfassung aktueller Informationen, beispielsweise über Verkehrsstauungen, Baustellen oder Straßensperrungen, die im Straßen- bzw. Landkarten-Speicher 60 nicht berücksichtigt sind, verfügt das Navigationsgerät 10 gemäß einem Ausführungsbeispiel der Erfindung über einen Empfänger, vorzugsweise in Form eines Funkempfängers 65, der an die Steuerung 20 angeschlossen ist.

Der Funkempfänger ist gemäß einem ersten Ausführungsbeispiel als TMC-Rundfunkempfänger ausgeführt, der in an sich bekannter Weise zur Auswertung von als Teil des Radio-Daten-Signals über eine Rundfunksendefrequenz übertragenen, nach dem TMC- (Traffic Message Channel-) Standard digital codierten Verkehrsinformationen geeignet ist. Die empfangenen Verkehrsinformationen werden erfindungsgemäß mit den Land- bzw. Straßenkartendaten aus dem Speicher 60 verknüpft, so daß bestimmten Streckenabschnitten die zugehörigen aktuellen Verkehrsinformationen, wie Verkehrsstauungen, Straßensperrungen oder Baustellen als charakteristische Eigenschaften zugeordnet werden.

Bei einem weiteren Ausführungsbeispiel ist der Funkempfänger als Mobilfunktelefon ausgeführt, so daß beispielsweise nach Anwahl eines Diensteanbieters und Herstellung der Verbindung der Diensteanbieter aktuelle oder aktualisierte Informationen über betroffene Streckenabschnitte zur Verfügung stellt. Diese werden dann wiederum mit den Landoder Straßenkarten-Daten zur Charakterisierung der betroffenen Streckenabschnitte verknüpft.

## Patentansprüche

1. Verfahren zur Leitung eines Führers eines Fahrzeugs, insbesondere eines Kraftfahrzeugs, Flugzeugs oder Schiffs, von mindestens einem Start- zu mindestens einem Zielpunkt, wobei eine Fahrtroute von dem mindestens einen Start- zu dem mindestens einen Zielpunkt bestimmt wird,
**dadurch gekennzeichnet,**
**daß** nach Vorgabe einer bestimmten Eigenschaft dem Fahrzeugführer im Rahmen der Routenplanung solche Streckenabschnitte der Fahrtroute, die über die vorgegebene Eigenschaft verfügen, zur individuellen Auswahl oder Ablehnung angeboten werden, und dass abgelehnte Streckenabschnitte von der Routenplanung ausgenommen werden.

2. Verfahren nach Anspruch 1, **dadurch gekennzeichnet,**
**daß** nach Ausgabe eines Streckenabschnitts mit der vorgegebenen Eigenschaft und Verwerfen des ausgegebenen Streckenabschnitts durch den Fahrzeugführer ein alternativer Streckenabschnitt bestimmt wird.

3. Verfahren nach Anspruch 1, **dadurch gekennzeichnet,**
**daß** bei Ermittlung eines Streckenabschnitts mit der vorgegebenen Eigenschaft ein alternativer Streckenabschnitt bestimmt und ausgegeben wird.

4. Verfahren nach Anspruch 3, **dadurch gekennzeichnet,**
**daß** der alternative Streckenabschnitt zusätzlich zu dem ermittelten Streckenabschnitt mit der vorgegebenen Eigenschaft ausgegeben wird.

5. Verfahren nach einem der Ansprüche 3 oder 4, **dadurch gekennzeichnet,**
**daß** zu mindestens dem alternativen oder dem über die vorgegebene Eigenschaft verfügenden Streckenabschnitt zusätzliche Informationen, durch die der alternative oder der über die vorgegebene Eigenschaft verfügende Streckenabschnitt charakterisiert ist, ausgegeben werden.

6. Verfahren nach Anspruch 5, **dadurch gekennzeichnet,**
**daß** die den alternativen Streckenabschnitt charakterisierenden Informationen mindestens eines der Merkmale
- zusätzliche Fahrtdauer,
- zusätzliche Fahrtstrecke oder
- eingesparte Straßenbenutzungsgebühr
sind.

7. Verfahren nach einem der vorherigen Ansprüche, **dadurch gekennzeichnet,**
**daß** die einen Streckenabschnitt charakterisierende, vorgebbare Eigenschaft
- eine Straßenbenutzungsgebühr,
- Verkehrsstauung(en),
- Straßensperrung(en) oder
- Baustelle(n) ist/sind.

## Claims

1. Method for guiding a driver of a vehicle, particularly of a motor vehicle, aircraft or ship, from at least one starting point to at least one destination, where a route of travel from the at least one starting point to the at least one destination is determined,
**characterized**
**in that** following the stipulation of a particular characteristic the vehicle driver is presented, as part of the route planning, with those road sections on the route of travel which have the prescribed characteristic for the purpose of individual selection or rejection, and in that rejected road sections are removed from the route planning.

2. Method according to Claim 1,
**characterized**
**in that** following the output of a road section with the prescribed characteristic and rejection of the output road section by the vehicle driver an alternative road section is determined.

3. Method according to Claim 1,
**characterized**
**in that** the ascertainment of a road section with the prescribed characteristic entails an alternative road section being determined and output.

4. Method according to Claim 3,
**characterized**
**in that** the alternative road section is output in addition to the ascertained road section with the prescribed characteristic.

5. Method according to either of Claims 3 and 4,
**characterized**
**in that** at least the alternative road section or the road section with the prescribed characteristic has additional information output for it which characterizes the alternative road section or the road section with the prescribed characteristic.

6. Method according to Claim 5,
**characterized**
**in that** the information characterizing the alternative road section is at least one of the following features:
- additional travelling time,
- additional travelling distance or
- road toll saved.

7. Method according to one of the preceding claims,
**characterized**
**in that** the prescribable characteristic characterizing a road section is
- a road toll,
- traffic jam(s),
- road closure(s) or
- roadworks.

## Revendications

1. Procédé pour guider le conducteur d'un véhicule, notamment d'un véhicule automobile, un avion ou un navire, entre au moins un point de départ et un point de destination, en déterminant un trajet entre au moins le point de départ et au moins le point de destination,
**caractérisée en ce qu'**
après avoir prédéfini une propriété donnée on fournit au conducteur dans le cadre de la planification du trajet, les segments de trajet ayant la caractéristique prédéfinie, pour permettre une sélection individuelle ou le rejet, et les segments de trajet rejetés sont supprimés de la planification du trajet.

2. Procédé selon la revendication 1,
**caractérisé en ce qu'**
après l'émission d'un segment de trajet ayant la caractéristique prédéfinie et rejet du segment de trajet émis par le conducteur, on détermine un segment de trajet alternatif.

3. Procédé selon la revendication 1,
**caractérisé en ce que**
pour déterminer un segment de trajet avec la caractéristique prédéfinie on détermine un segment de trajet alternatif et on fournit celui-ci.

4. Procédé selon la revendication 3,
**caractérisé en ce qu'**
en plus du segment de trajet déterminé ayant la caractéristique prédéfinie on émet le segment de trajet alternatif.

5. Procédé selon l'une des revendications 3 ou 4,
**caractérisé en ce que**
pour au moins le segment de trajet alternatif ou celui ayant la caractéristique prédéfinie on fournit des informations supplémentaires caractérisant le segment de trajet alternatif ou le segment de trajet ayant la caractéristique prédéfinie.

6. Procédé selon la revendication 5,
**caractérisé en ce que**
les informations caractérisant le segment de trajet alternatif sont constituées par au moins l'une des caractéristiques suivantes :
- durée de conduite supplémentaire,
- trajet supplémentaire ou
- économie de péage.

7. Procédé selon l'une des revendications précédentes,
**caractérisé en ce que**
la caractéristique prédéfinie relative à un segment de trajet est la suivante :
- un péage,
- un bouchon,
- une route fermée ou
- des chantiers.
